(19) **Europäisches Patentamt / European Patent Office / Office européen des brevets**

(11) **EP 4 068 093 B1**

(12) # EUROPEAN PATENT SPECIFICATION

(45) Date of publication and mention of the grant of the patent:
**05.08.2026 Bulletin 2026/32**

(51) International Patent Classification (IPC):
**G06F 9/4401** (2018.01)    **G06F 9/451** (2018.01)
**G06F 9/50** (2006.01)    **G06F 9/54** (2006.01)

(21) Application number: **21382268.7**

(22) Date of filing: **31.03.2021**

(52) Cooperative Patent Classification (CPC):
**G06F 9/5072; G06F 9/4411; G06F 9/452; G06F 9/54;** G06F 2209/541

(54) **REMOTE COMPUTING RESOURCE EXECUTION**

ENTFERNTE RECHENRESSOURCENAUSFÜHRUNG

EXÉCUTION DE RESSOURCES DE CALCUL À DISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.10.2022 Bulletin 2022/40**

(73) Proprietor: **Vodafone Group Services Limited Newbury RG14 2FN (GB)**

(72) Inventors:
• **MARINO LÓPEZ, Víctor London W2 6BY (GB)**

• **GONZÁLEZ PLAZA, Alejandro London W2 6BY (GB)**
• **VLAD, Adriano London W2 6BY (GB)**
• **DOMÍNGUEZ, Francisco London W2 6BY (GB)**

(74) Representative: **Boult Wade Tennant LLP Salisbury Square House 8 Salisbury Square London EC4Y 8AP (GB)**

(56) References cited:
**EP-A1- 3 345 091    US-A1- 2016 044 139 US-A1- 2020 012 535**

**Description**

**Field of the Disclosure**

The present disclosure relates to user equipment and systems for interacting with and executing remote computing resources.

**Background to the Disclosure**

Due to cloud computing and high-speed networks, it is possible to execute applications remotely. For example, cloud gaming allows users to play resource-intensive games in low-end devices, since the game engine runs on cloud servers that render game scenes and streams them to users over the internet. Cloud smartphones follow a similar technical approach, in which a virtualised version of a mobile operating system (OS) runs in the cloud, while a user's smartphone device receives the content as an interactive video stream. This offers many potential benefits, such as the ability to run demanding tasks from a smartphone, reduced hardware requirements (and thus cost) for the client device, increased security and/or seamless multi-device continuity. This methodology is applicable in other devices, such as personal computers, tablets, and wearables, which are defined herein as cloud devices.

One of the key challenges that cloud devices face is their responsiveness, or input lag. This is the time elapsed between a user action or user generated event (e.g. touching the screen or providing a voice input) and that input being reflected on the user's local hardware (e.g. the display). For example, when there is high latency, a user may find that when they provide a touch input to control a character in a game, there is a visible delay between them touching the screen and the character in the game responding to the touch input.

Existing cloud smartphone solutions, such as Anbox Cloud by Canonical, require installing a client application on the user smartphone to establish a connection with the cloud, where a virtual OS is running. Whilst existing systems work satisfactorily in some contexts, there remains a need to improve responsiveness and reduce input lag in cloud devices. It is an object of the present disclosure to address these and other problems in known systems for providing cloud devices.

US-2016/044139A1 describes methods and systems for communications between apps and virtual machines.

US-2020/012535A1 describes a system, method and computer program product for capturing touch events for a virtual mobile device platform.

EP3345091A1 describes interactive remote application streaming with client-side event capture and server-side execution.

**Summary of the Disclosure**

The invention is defined by the independent claims. Particular embodiments are defined by the subject-matter of the dependent claims. Embodiments which do not fall within the scope of the claims are to be interpreted merely as examples useful for understanding the invention.

The present disclosure provides methods, systems and apparatus for allowing the hardware drivers of user equipment to communicate with a cloud-based OS running cloud-based applications over a network connection. The cloud-based OS and cloud-based applications may be collectively termed remote computing resources (e.g. they are computing resources running at one or several remote servers, which are provided to a user equipment over a network). The disclosure proposes a method to reduce the total processing time in a cloud device system by splitting the physical location of the layers of the OS and reducing duplicative processing.

This is achieved by causing the output of hardware drivers to be sent directly to the cloud for processing by a virtualised OS. For example, user applications, profiles and other features related to higher OS layers can remain on the cloud, while the user may only require a low-end device comprising a simple kernel, drivers (for a touchscreen, speaker, microphone, and so on) and a new layer, termed the Network Hardware Abstraction Layer (N-HAL). The user equipment and the server(s) each comprise a respective N-HAL (e.g. there is a local N-HAL in the user equipment and/or a remote N-HAL in the server), and these N-HALs can interface with each other over a network. In general, a conventional hardware abstraction layer (HAL) is a logical division of code that serves as an abstraction layer between physical hardware and software that uses the hardware, which provides a device driver interface allowing a program to communicate with the hardware. The N-HALs of the present disclosure are an adaptation of conventional HALs, in that they act to provide a communication interface between the hardware drivers of a user equipment and upper OS layers that are at a remote location (e.g. one or more cloud servers).

The N-HALs described herein provide data from the hardware drivers directly to the cloud for execution of the remote computing resource (e.g. a remote operating system and/or a remote application on a remote operating system), so as to reduce input latency (relative to existing cloud systems that require local applications at the application layer). Thus, a simpler and more efficient architecture is provided.

The cloud-based OS sends raw data to the client device over the internet (e.g. using the N-HAL of the server), for presentation to the user by the hardware of the client device. For instance, the N-HAL of the client device may be configured to receive the raw data from the N-HAL of the server and translate the received raw data into specific instructions for the device's drivers so as to cause the client device's hardware to present the content (e.g. by displaying content on the screen, by playing a sound, or by vibrating to provide haptic feedback). Alternatively, the translating of raw data may occur at the server, with the N-HAL of the client device receiving translated data and presenting the content.

Additionally, buffered animations or other content (e.g., audio, screen updates, and so on) may be sent to the device in order to improve the user experience and the perceived responsiveness of the user interface (UI). Such buffered content may be pre-computed at the server. Advantageously, the use of buffered content can allow video, audio and/or any other hardware responses to be provided to a user even before the user equipment has contacted the cloud server, as the content has already been intelligently stored in a buffer. The buffer can be located in the device, the cloud or even within a network entity (e.g. provided by a network operator).

Existing solutions require installing a client application on top of the existing smartphone OS. As a result, they require a full stack OS on the user's device. In such cases, this client application contacts the cloud server where a virtualised full stack OS is running, which implies a duplicative OS stack, requiring a higher processing time to process user actions. Thus, embodiments of the present disclosure can reduce input latency. By allowing for low-latency interaction between a cloud OS and hardware elements of a user equipment, the processing requirements of user equipment are reduced and there is less dependency on local hardware, because even OS-level libraries are in the cloud. Moreover, in the case of mobile devices (e.g. smartphones or tablet), it is possible to provide a lightweight local OS to which the device can revert, using the local HAL, when connectivity is not available. Hence, a hybrid device having a lightweight OS for basic functionality can be provided when a connection is not available or is poor quality.

Thus, the present disclosure uses cloud technology to split the local OS of user equipment from the device itself. The new type of user equipment receives the screen content as an interactive content (e.g. video) stream, along with any other kind of hardware feedback (e.g. haptic responses and the like) from the cloud and the OS then becomes accessible from any device, including any one or more of: smartphones, tablets, PCs, TVs, smart glasses, wearables, surfaces such as mirrors and windscreens, and so on. By making cloud devices more useable and therefore more viable, this allows users to access all of their apps, data across multiple devices whilst reducing the hardware required for their devices. Moreover, this allows users to continue session across screens seamlessly, because their data may be stored in the cloud so that the data can be accessed from multiple different user equipments. For example, a user's data can be stored in the cloud and that data can be accessed by the user's cloud smartphone and their cloud smart television. The data presented by the virtual television (i.e. the device session in the cloud) and the virtual smartphone (i.e. the device session in the cloud) can be synchronised in real time, so that changes in the data can be shown on the screens of both devices at the same time. In this case, the virtual television and the virtual smartphone present the same content, but the content is only in one place (the cloud) and is simultaneously streamed to both devices.

Throughout this disclosure, the terms "local" and "remote" are used extensively. It will be understood that "local" refers to features of the user equipment and "remote" refers to features of entities (e.g. servers) other than the user equipment. Thus, when a server is described as having a "remote N-HAL", it will be understood that "remote" in this context means "remote from the user equipment". Similarly, the expression "local N-HAL" will be understood as meaning "local to the user equipment".

This provides numerous benefits for users, including flagship-level performance on low-cost devices, persistent apps and data across screens of various devices, Moreover, such devices are always up to date as there is more security and less fragmentation (e.g. in respect of the OS versions of devices) and this allows users to switch between profiles and phone numbers easily. Moreover, with such architecture, faster app development is facilitated, since app code can be used by all devices using the virtualised OS. Moreover, games and apps can be developed without hardware constraints and the solutions of the present disclosure break the dependency between hardware and software, which prevent apps from running on different operating systems. Further advantages will become apparent from the following discussion.

Each of the above-described features can be used in any combination and can be modified to include any of the features of the following embodiments.

## Brief Description of the Drawings

The disclosure may be put into practice in a number of ways. Known systems and preferred embodiments are described herein, by way of example only and with reference to the accompanying drawings, in which:

Figure 1 shows a system for allowing cloud devices to interact with remote applications;
Figure 2 shows a known smartphone OS architecture;
Figure 3 shows a known smartphone executing an application locally;
Figure 4 shows a known system for allowing a smartphone to interact with an application executing in the cloud;

Figure 5 shows a system for providing a remote application to a user equipment in accordance with a first embodiment;
Figure 6 shows an OS architecture for a cloud device in accordance with a second embodiment; and
Figure 7 shows an OS architecture for a cloud device in accordance with a third embodiment.

## Detailed Description

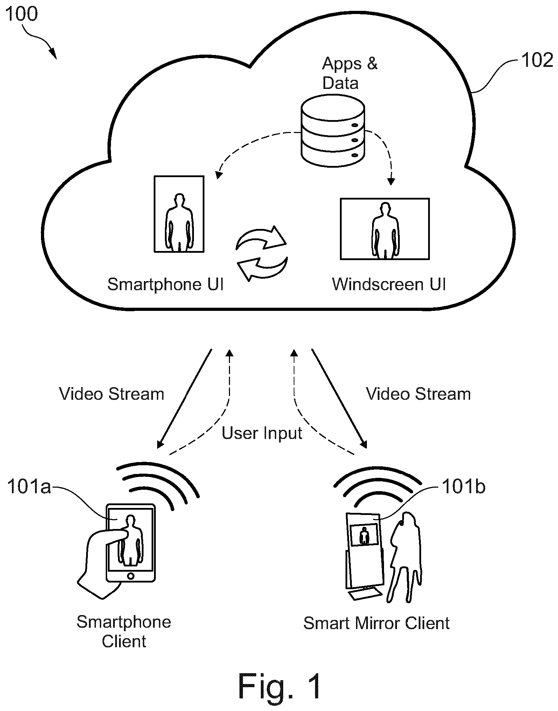

In Figure 1, there is shown a system 100 for providing application functionality to remote client devices. The system 100 comprises a smartphone client 101a and a smart mirror client 101b. The system 100 further comprises a cloud-based server 102.

The smartphone client 101a and smart mirror client 101b are each able to communicate bi-directionally and wirelessly (e.g. via WiFi, or via a mobile network such as LTE) with the server 102. The server 102 stores applications and data, which can be provided to a smartphone UI, or a windscreen UI executing with the server 102. The system 100 allows virtualised versions of Android OS to be created on-demand.

When a user wishes to interact with an application executing remotely at the server 102, they can run a local application on the smartphone client 101a and/or the smart mirror client 101b. The smartphone client 101a and/or the smart mirror client 101b then processes their user inputs using the local application and sends the user inputs to the server, where the application at the server 102 receives the input and executes the application using the received user input. Then, the output of the application executing at the server 102 is provided as a video stream to the smartphone client 101a or the smart mirror client 101b.

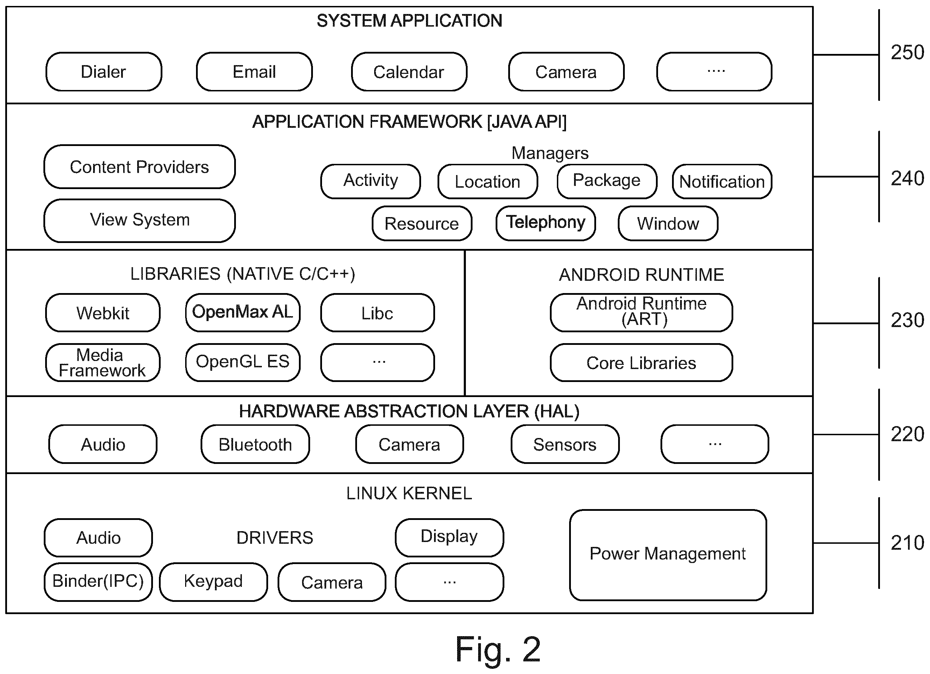

In Figure 2, there is shown a typical OS architecture in a smartphone, such as an Android smartphone. The architecture comprises the hardware drivers and kernel (e.g. Linux) layer 210, which include hardware-specific drivers provided and updated by each hardware manufacturer. The examples shown include audio, keypad, camera and display drivers. Moreover, the drivers and kernel layer 210 includes power management and Binder(IPC), which is an inter-process communication system for developing object-oriented OS services.

Above the drivers and kernel layer 210 is the hardware abstraction layer (HAL) 220, which is an abstraction layer between the OS and the drivers of the layer below. The HAL 220 comprises APIs designed to abstract hardware drivers from OS-level libraries. For example, this layer allows the hardware associated with audio, Bluetooth, camera and sensors to be accessed by higher level programs through programming interfaces.

The native libraries and OS runtime environment 230 are above the HAL 220, and these software components translate application code to native code. The libraries (Native C/C++) include Webkit, OpenMax AL, Libc, Media Framework and OpenGL ES. The Android Runtime (ART) includes core libraries. The application framework (Java API) 240 sits above the native libraries and OS runtime environment 230. The application framework comprises software components that can be used to create applications. Finally, the system applications 250, which are the user-facing apps software such as a dialler, email, calendars or camera apps reside at this layer.

While this architecture for an Android OS is known and similar architecture is used and described throughout this disclosure, it will be understood that different OS architectures can be used in accordance with embodiments described herein. For instance, some embodiments of the present disclosure relate to the way in which hardware drivers interface with other components, and such hardware drivers are found in numerous operating systems, and the present disclosure is useful in such other operating systems. Moreover, some embodiments of the present disclosure relate to changes to the hardware abstraction layer, and numerous other operating systems (e.g. iOS, Microsoft Windows, Chrome OS, BlackBerry Tablet OS, and Linux) comprise similar hardware drivers and hardware abstraction layers. Hence, the present disclosure can be employed in various such operating systems. Moreover, the present disclosure can be implemented in devices having different hardware (e.g. having more, fewer or different types of hardware inputs or outputs) and which therefore have different hardware drivers.

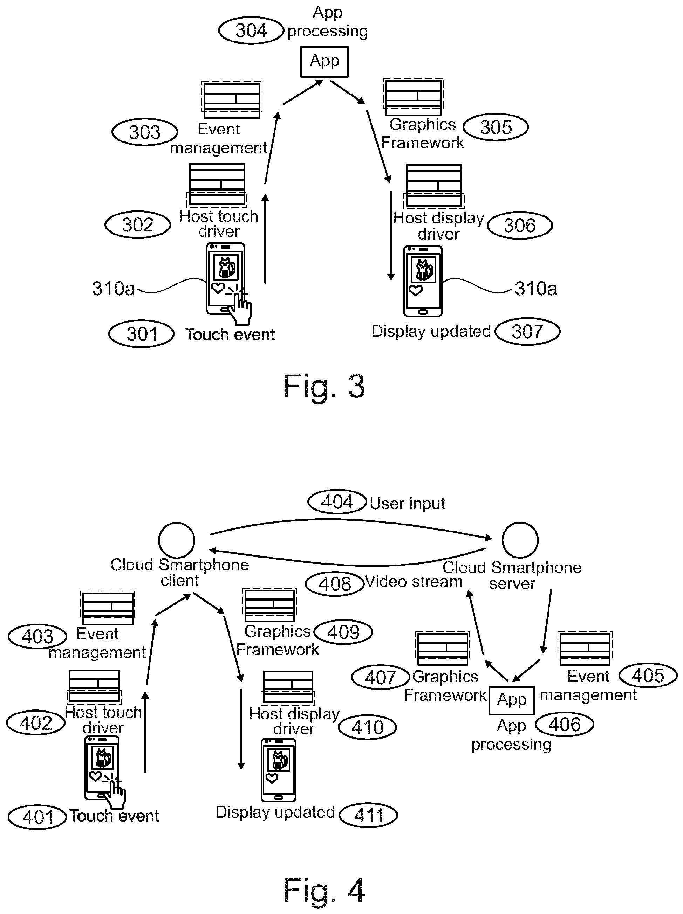

Turning next to Figure 3, there is shown an example of how input latency arises for a touch event, in a case when an application runs locally in a user equipment, which in this case is a conventional smartphone. For illustrative purposes, a well-known procedure in a social media application (e.g. Instagram) is depicted, which is the process of liking a photo (thus, involving a touch event in which the screen is pressed in a certain location). Figure 3 shows each step of the process, to explain what happens in the background at each Android OS layer when a user likes a photo in a social media application.

At step 301, the user touches the screen. It can be seen in Figure 3 that a heart symbol on the screen is not filled in, indicating that the photo shown on the display has not yet been liked. At step 302, the touch driver detects the user's action and sends it to upper OS layers. This may be a raw data stream indicating the way in which the touch screen was used and at what time. Thus, this data may simply represent the fact that a particular position on the screen was touched at a particular instant in time. In step 303, the event is properly handled by the event manager of the server. Then, at step 304, the social media app receives the user event, executes based on the touch input, and triggers the process to update the device display accordingly. Hence, at step 305, the graphic framework renders new graphics that will be represented by the graphic driver. In step 306, the display driver receives the instructions generated by the graphics framework and, finally, at step 307, the display is updated. It can now be seen that the heart on the display of the phone is filled in, which indicates that the photo has been liked.

It can be seen from Figure 3 that steps 302 and 306 are executed at the lower levels of the OS, which are the kernel and drivers layer 210 shown in Figure 2. Meanwhile, steps 303, 304 and 305 take place at the higher layers of the architecture of Figure 2, namely the hardware abstraction layer (HAL) 220, the native libraries and OS runtime environment 230, the application framework (Java API) 240 and the system applications 250.

The input lag for the touch event in the scenario shown in Figure 3 can be summarised by Equation 1, in which the numbers in parentheses correspond with the steps shown in Figure 3:

$$input\_latency = local\_drivers\ (302,\ 306) + local\_OS\ (303,\ 305) + local\_app\_processing\ (304) \qquad \text{Equation 1}$$

When the app is running locally on the smartphone, input latency remains low, because there are no duplicate elements and no network interfaces involved during the touch event. This is because application processing is done locally in step 304.

Turning next to Figure 4, there is shown an example of how input latency arises when using a cloud smartphone solution. In this example, the operation of Canonical Anbox Cloud is shown. When using a cloud smartphone solution using known systems, a client application is installed on the user's device (which is again an Android smartphone in this case), which interacts with the virtualised smartphone that is running on the cloud server. In this case, app processing is performed in a powerful cloud platform. The client application has two main functionalities: it captures and sends user actions to the cloud server where the virtualised Android OS is running; and it decodes the video stream (which is sent by the cloud server) that reflects the user's actions as processed by the remote application.

At step 401, a user touches the screen. This is much the same as step 301 in Figure 3. At step 402, the touch driver (which is in layer 210 of the stack of Figure 2) detects the user action and sends it to upper OS layers (i.e. layers 220-240 of Figure 2). At step 403, the event is properly handled by the event manager. It is at this point that the system diverges from the system shown in Figure 3.

At step 404, the Canonical client app (which runs at the upper layer 250 of the stack in Figure 2) receives (via a network connection, such as the internet) the user's event and sends data describing the event to the virtualised OS that is running on the cloud. At step 405, the virtualised OS receives the user event as if it were triggered by a virtualised screen. Therefore, this event is handled accordingly by the virtualised OS layers until the event reaches the application layer. At step 406, the social media application (which operates at the application layer) receives the touch event and triggers the process to update the device's display. Then, at step 407, the graphic framework of the virtualized OS renders new graphics that represent the social media application update as a video stream. At step 408, the cloud smartphone server sends the video stream to the cloud smartphone client. In step 409, the local graphics framework decodes the video stream. Then, at step 410, the graphics framework then sends instructions to the display driver to update the screen accordingly. Finally, in step 411, the display is updated.

The input lag for the touch event in this scenario can be summarised by Equation 2, in which the numbers in parentheses correspond with the steps shown in Figure 4 and described above:

$$input\_latency = local\_drivers\ (402,\ 410) + local\_OS\ (403,\ 409) + network\_latency\ (404,\ 408) + cloud\_OS\ (405,\ 407) + app\_processing\ (406) \qquad \text{Equation 2}$$

In this example, input latency is increased compared to a conventional location application, due to the introduction of network latency at steps 404 and 408. Moreover, in this example, there are duplicated processing steps at 403 and 409, which are repeated in steps 405 and 407, due to there being two operating systems (one in the smartphone and one in the virtualised server) running at the same time. As the cloud smartphone app runs at the application layer, the client device still needs to be capable of running a full OS.

The present disclosure recognises that existing systems duplicate OS layers due to their architecture: one full stack OS is required to run the client application on the user smartphone, and another full stack is deployed in the virtualised environment in the cloud. Thus, processing times will be higher for every user interaction.

Embodiments of the present disclosure take advantage of the fact that most of the touch latency in mobile devices is introduced by the kernel and device drivers, and not by the upper application layers. Kernel and driver performance is highly dependent on the device, which implies it can be optimised. For instance, Table 1 shows typical values for the latency for a touch input to be received at the kernel and for the touch input to be passed from the Kernel to Java.

| Device | Kernel to Java (ms) | Touch to Kernel (ms) |
|---|---|---|
| Nexus 5 | 3.3 | 23.6 |
| Nexus 5X | 2.4 | 22.6 |

(continued)

| Device | Kernel to Java (ms) | Touch to Kernel (ms) |
|---|---|---|
| Nexus 7 | 1.4 | <u>28.2</u> |
| Nexus 9 | 1.3 | 17.4 |
| Pixel C | 1.1 | 22.7 |
| Pixel | 2.0 | **7.6** |
| Pixel XL | 1.8 | **12.4** |
| Average | 1.9 | 19.2 |
| *Table 1* | | |

The Pixel and Pixel XL introduce only 7.6 ms and 12.4 ms, whilst the Nexus 7 introduces 28.2 ms of latency for a touch input to reach the kernel. On the other hand, all of the smartphones tested above show 1-4 ms of latency from the kernel to Java. Thus, this implies that an OS can be optimised at the kernel to provide extremely low latencies at the lower layers of the stack. These principles can be extended to cloud devices having virtualised operating systems.

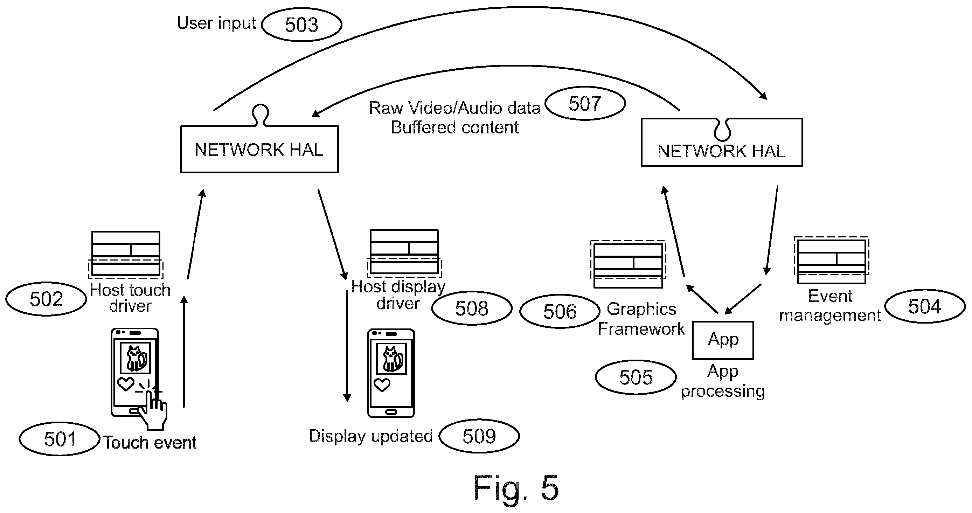

In order to reduce the extra latency introduced by current cloud devices solutions, the present disclosure proposes a new architecture that eliminates certain redundant elements or at least reduces redundant processing of inputs. Avoiding extra processing keeps input lag to acceptable levels provided network latency remains low. A first embodiment is depicted in Figure 5.

To achieve this, the client devices of the present disclosure may have a lightweight OS that only contains the required hardware drivers. These drivers are capable of interacting directly with the cloud-based server, without communications passing through the local application layer of the user equipment. The cloud-based server may comprise a new element that differs from existing systems: a remote hardware abstraction layer, or a "Network Hardware Abstraction Layer", which may be termed a "Network HAL" or "N-HAL". As opposed to the regular HAL present in today's smartphone operating systems (such as Android), which is a purely local layer, the Network HAL is a network interface that allows the user equipment device's drivers to communicate directly with the upper layers of a virtualised OS over a network connection, for example by implementing one or a series of APIs. Therefore, the Network HAL of the present disclosure may comprise a local N-HAL, located on the user equipment, and a remote N-HAL located in the cloud. For instance, the user equipment and the server may each comprise a respective N-HAL and these may work together to allow communication between the drivers of the user equipment and the OS and/or applications on the server (e.g. to permit the user equipment to send data identifying a user input to a server, the data identifying the user input being based on data from a hardware driver of the input device). Thus, in the systems described herein, it is preferred that at least some (and optionally all) of the functionality performed by a conventional local HAL is performed remotely at the server. In this way, the functionality of the conventional HAL is either moved to the cloud entirely or at least distributed across different entities (the UE and the server). Data identifying a user input may uniquely identify the user input. For example, data identifying the user input may indicate a type of input (e.g. touch, voice, physical button) and also the precise information provided by the input (e.g. an indication of which position on a touch device was pressed, audio data received as a voice input, or the particular type and function of a physical button that was pressed).

The Network HAL may also include a buffer (N-HAL buffer) to store and stream pre-processed animations to the device, as well as other content such as audio (e.g. notification sounds or music), screen updates (e.g. screen transitions in response to inputs), vibration, haptic feedback, camera shutter movements, etc. These may further improve the perceived responsiveness of the UI and enhance the overall user experience. In some examples, the cloud provider may be able to predict (e.g. using pattern recognition and/or predictive algorithms) which actions are likely to be made by the user of the cloud device and the N-HAL can be used to buffer and proactively store content and feedback to be used without the need for the cloud device to contact the cloud again. In such cases, the buffered content can be provided immediately after the user interacts with the device (including when there is no network connectivity). Therefore, latency can be decreased significantly when content is stored in the buffer. This content can be stored on-device but can also be stored in a network endpoint. While buffered content will be sent to the device, this will not be a problem as often there is more bandwidth than is needed, which could be used to serve this purpose.

The procedure depicted in Figure 5 will now be described in more detail. Figure 5 shows the communication between a local device and a cloud OS using the Network HAL of the present disclosure. Again, the process shown is the act of liking a photo on social media. The Network HAL may send the raw input of the device sensors (e.g. as provided by the hardware drivers) to the cloud OS via the network, and will also receive raw video and audio data from the cloud OS that will be played back by the device hardware. As redundant OS elements are removed, processing time will be reduced and input lag will remain lower than the system depicted in Figure 4.

Figure 5 depicts this new, simplified architecture, introducing the Network HAL and removing the redundant OS layers from the client device. It is to be noted that a single device is shown in Figure 5, but any number (such as one, two, three or more) user equipment devices can be used in the systems described herein. At step 501, the user touches the screen. In step 502, the touch driver detects the user action and sends it to the Network HAL of the user equipment, which resides within the user equipment and facilitates communication between the driver and the virtualised OS. In step 503, the Network HAL transfers data identifying the user input over the network to the cloud server, where it is received by the complementary Network HAL of the cloud server. In step 504, the user input is received by the upper layer of the cloud OS and sent to the app immediately. At step 505, the app processes the user input and sends the screen update to the graphics framework, which renders the new video frames and sound output and sends the raw data to the Network HAL in step 506. Then, in step 507, the Network HAL transfers the raw video/audio data to the client device over the network connection. Buffered content may also be sent at this stage, as explained above. In step 508, when the new video and audio data is received, it is processed by the local device drivers immediately and sent to the display. At step 509, the display is updated accordingly.

At any of the steps in Figure 5 (e.g. at any of steps 503-509), the user equipment may perform an optional step of checking (e.g. using the N-HAL of the user equipment) whether appropriate buffered content is already stored on the user equipment. If appropriate buffered content is stored, then the N-HAL directly provides the buffered content without the need to transfer the content from the cloud. This can provide a similar decrease in latency as is observed when a cache hit occurs.

In contrast to the system described in Figure 4, the latency of the system of Figure 5 can be summarised by Equation 3, in which the numbers in parentheses correspond with the steps shown in Figure 5:

$$input\_latency = local\_drivers\ (502, 508) + network\_latency\ (503, 507) + cloud\_OS\ (504, 506) + app\_processing\ (505) \qquad \text{Equation 3}$$

It is immediately apparent from Equation 3 that there is no *local_OS* term, in contrast with Equations 1 and 2. Hence, in this case, the application processing is performed in the cloud (at step 505) and the different architecture does not introduce additional latency in the way that the system of Figure 4 does. Provided that network latency is low, input latency can be reduced to the extent that it does not impact on a user's experience. Moreover, hardware requirements of the user equipment in this system are simplified because the client device does not need to run or be capable of running a full OS. For instance, in order to implement this system, a new type of client device can be provided, which need not run any of the resource-intensive, well-known, existing mobile operating systems locally. Hence, the time for a touch input to be passed from the kernel to the Network HAL can be optimised such that input latency is very low and high responsiveness is achieved.

Thus, in generalised terms, the embodiment of Figure 5 provides a system for providing a remote operating system and applications (e.g. a social media application, as in Figure 5, or any other application) to a user equipment (e.g. a smartphone, tablet, wearable or any other device). The system comprises the user equipment and at least one server (e.g. a remote, cloud-based server, although there could be multiple such servers). The user equipment is configured to: receive a user input (e.g. a touch input, although it will be understood that the method of Figure 5 can be applied to any user input) from an input device (e.g. a touchscreen) of the user equipment; and send data (e.g. directly from the hardware driver to the server, via a Network HAL) identifying the user input to the server, wherein the data identifying the user input comprises data from a hardware driver (e.g. the raw output of the hardware driver, or the raw output of the hardware driver translated for use by upper layers of the stack) of the input device. The server is configured to: receive the data identifying the user input; cause execution of the command on the remote computing resource (e.g. by executing an action in an application, or by issuing a command to another entity to cause an action to be executed) based on (e.g. using) the data identifying the user input; and send an output of the executed remote computing resource (such as an audio and/or video stream) to the user equipment.

Providing, to a server, data based on data from a hardware driver (e.g. its raw output, or its raw output translated by a N-HAL, where the raw output may be translated by a N-HAL of the device or by a remote N-HAL at a server) of the input device allows the server to act on that data to allow a remote computing resource to be executed with reduced input latency, due to the elimination of redundant processing in known systems. Thus, user experience is improved and hardware constraints on user equipment are alleviated, because the user equipment need only be able to communicate with the server and does not need to be capable of performing advanced processing tasks (e.g. rendering high-end gaming graphics) locally.

The present disclosure also provides two standalone apparatus for use in the systems described herein. For example, the present disclosure provides a user equipment for interacting with a remote computing resource (e.g. a remote operating system and its applications), configured to: receive a user input from an input device of the user equipment; send data identifying the user input to a server configured to cause execution of the command on the remote operating system, wherein the data identifying the user input is based on (e.g. comprises the information output by the hardware driver, perhaps modified/translated for use by the entity to which the data is sent) data from a hardware driver of the input device; and receive an output of the executed remote operating system from the server. This provides a cloud device that can operate with a high degree of responsiveness. In the systems of the disclosure, the user equipment is preferably further configured to: receive the output of the executed remote operating system and applications; and provide the output of the executed remote operating system and applications on an output device (e.g. a display or speaker) of the user equipment. The user equipment may comprise any one or more of: a smartphone; a tablet; a personal computer; a television; a smart watch; a smart mirror; smart glasses; an augmented reality headset; a virtual reality headset; a smart windscreen; a smart wearable device, or any other device capable of using the N-HAL to communicate with the remote operating system.

Moreover, the present disclosure provides a server (e.g. a cloud-based server) for providing a remote computing resource (e.g. an operating system and applications) to a user equipment, configured to: receive (e.g. directly from, or indirectly, i.e. via another entity) data identifying a user input from a user equipment, the data identifying the user input comprising data from a hardware driver of an input device of the user equipment; cause execution of the commands on the remote operating system and applications based on the data identifying the user input; and send (e.g. directly to, or via another entity) an output of the executed commands on the remote operating system and applications to the user equipment. This server facilitates the cloud devices of the present disclosure by providing remote processing capabilities in a way that reduces latency.

It is preferred that the server comprises a remote hardware abstraction layer for the input device (e.g. the N-HAL of the present disclosure). This allows the server to interface directly with the drivers of the input device, so as to allow quick communication. Thus, if the server is executing the remote operating system, then the remote operating system can be executed based on the user input with no redundant processing of the user input. The remote hardware abstraction layer of the server may comprise or may be configured to communicate (e.g. directly or indirectly) using one or a plurality of application programming interfaces, APIs, configured to cause the server to interface (e.g. to communicate, either directly or indirectly via another entity such as another server) with one or a plurality of respective hardware drivers of the user equipment to receive the data identifying the user input. For example, the API(s) of the remote hardware abstraction layer may be configured to facilitate communication between the remote computing resource and a local interface (e.g. a local N-HAL) of the user equipment. Hence, in general terms, the user equipment may comprise an interface (e.g. the local N-HAL) that is configured to communicate the data identifying the user input to the remote hardware abstraction layer of the server (e.g. the N-HAL in the server). There may be one or a plurality of respective APIs for each hardware driver. For example, there may be an API for each of the display, audio, microphone, touch and/or camera drivers (where such drivers are present on the device).

As noted above, the remote hardware abstraction layer of the server may comprise one or more APIs. However, alternatively, the remote hardware abstraction layer of the server may be configured to communicate using one or more APIs. For example, the APIs might be in a different server to the remote hardware abstraction layer. In such a case, the APIs may be on a network operator's servers while the cloud OS and applications may be in servers controlled by a different entity (e.g. another network operator, or a remote OS operator rather than a network operator).

The Network HAL of the present disclosure may comprise a plurality of network APIs that interact with the local hardware drivers in the user equipment and communicate the received data to an upstream cloud OS. Examples of suitable APIs include any one or more of: a display API, for a video stream received from the cloud OS, decoded and rendered on-screen; an audio API, for an audio stream received from the cloud OS, decoded and played through the speakers; a microphone API, for an audio stream recorded through the local microphone, encoded and streamed to the cloud OS; a camera API, for a stack of image frames captured from the camera sensor, encoded and streamed to the cloud OS; a touch API, for touch events registered through the touch panel and sent to the cloud OS; and/or a buffering API, for a series of pre-processed animations and other kinds of feedback which are played immediately after the user touches the screen.

Moreover, it is preferable and advantageous for the systems of the present disclosure to be further configured to send (e.g. using the N-HAL of the server, for example as a separate data stream to the output of the remote application) buffered content to the user equipment. This allows an improved UI to be provided, as delays in showing animations or other content can be reduced or eliminated. Preferably, the buffered content comprises any one or more of: screen animations; audio content; video content; image content; vibration, haptic feedback, and/or others. Such content can provide the look and feel of a premium device having high-end hardware, even when that is not the case. Various other types of content can be buffered to enhance the perceived responsiveness. The buffered content may be stored on-device or in a network endpoint (e.g. a specific server for storing such content, which could be at the same location as the N-HAL/APIs described herein or which could be in another location to the N-HAL/APIs). In the systems of the present disclosure, the user equipment may be configured to store buffered content (e.g. locally on the user equipment) and to present the buffered content in response to the user input. Preferably, the user equipment is configured to determine whether buffered content is stored locally and to present the locally-stored buffered content in response to the user input.

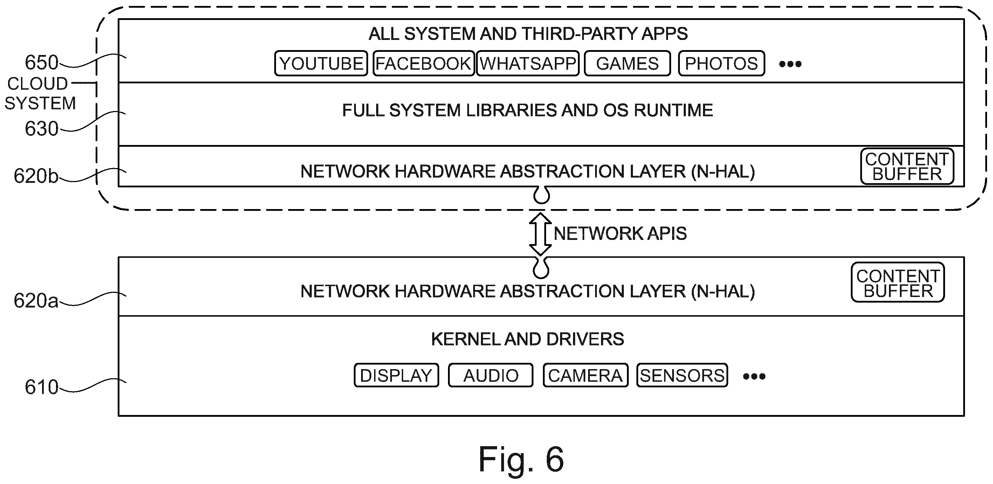

Turning next to Figure 6, there is shown an architecture for a cloud device executing a Network HAL in a second embodiment. In this case, the cloud device is a smart mirror, which is an always-online device without any OS running locally. Hence, this device is fully dependent on the cloud OS. The architecture comprises a local kernel and drivers layer 610, which is a similar, albeit simplified, layer to the hardware drivers and kernel layer 210 described previously. The kernel and drivers layer 610 comprises display, audio, camera and sensor drivers for the device.

In this architecture, the kernel and drivers layer 610 interfaces with the local Network HAL 620a. This local Network HAL operates similarly to the HAL described with reference to Figure 5, in that it communicates with a remote Network HAL 620b at the server. The server is a cloud system that further comprises full system libraries and an OS runtime environment 630 and any number of system and third-party apps in an application layer 650, such as YouTube, Facebook, WhatsApp, any games and any photo viewers. Thus, this architecture represents a division of the hardware drivers (which are in the local device) and the processing of the output of the hardware drivers (which is performed in the cloud system, i.e. remotely). These divided parts of the architecture are able to communicate via the local and remote Network HAL, which interface with one another to advantageous effect. Thus, a lightweight device can be provided with the functionality of a full OS whilst exhibiting low input latency, due to the systems of the present disclosure. This embodiment is particularly suited to devices that are unlikely to lose their connection frequently.

Returning to the generalised terms used previously, the remote computing resources of the present disclosure preferably comprise a cloud-based operating system, OS, configured to be executed based on the data identifying the user input; and/or a remote application configured to be executed based on the data identifying the user input. This may be executed at the server that receives the data identifying the user input, or alternatively the server may be a distinct entity (e.g. a secondary server in communication with the primary server that receives the data identifying the user input).

In the systems of the present disclosure, the output of the executed remote computing resource preferably comprises any one or more of: an image; an audio stream; a video stream; an instruction to provide haptic feedback; and/or an instruction to operate a sensor (e.g. a camera, such as a front-facing camera for identification purposes, or a fingerprint scanner) of the user equipment. Additionally or alternatively, the user input may comprise any one or more of: a touch input; an audio input; a camera input; a physical button input and/or any other sensor (fingerprint readers, proximity sensors, etc).

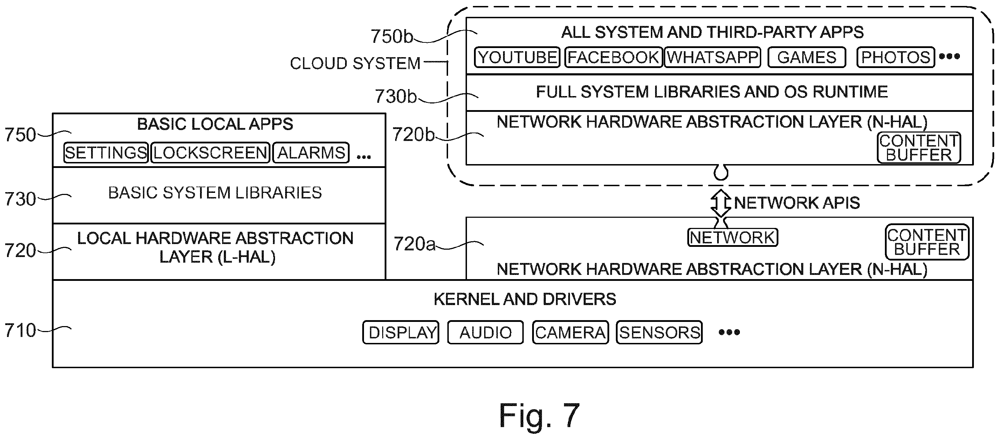

Referring now to Figure 7, there is shown an architecture for a hybrid device, which can be a cloud smartphone (although other types of devices can be used), according to a third embodiment. The architecture comprises a conventional kernel and drivers layer 710, a local HAL 720 (which acts similarly to a conventional HAL by facilitating communication between local hardware and local applications), a basic system libraries layer 730 and a basic local application layer 750. These operate similar to the corresponding layers 210, 220, 230 and 250 in Figure 2. The local HAL 720 operates in accordance with a classical OS architecture in that it communicates with the kernel and drivers layer 710 and is to be used by a light OS running locally. This provides a lightweight local device having only basic functionality, for instance for when there is an intermittent network connection.

The architecture of Figure 7 further comprises a Network HAL 720a, which is similar to the Network HAL 620a and described with reference to Figure 5. The Network HAL 720a is configured to communicate with layers of the stack at a remote server, including the Network HAL 720b of the server, the full system libraries and OS runtime layer 730b (which provides full remote OS functionality) and the remote applications 750b. The apps available in layer 750b (YouTube, Facebook, WhatsApp, games and photo viewers) are more resource-intensive than the apps available from the local application layer 750.

The kernel may be programmed at a low level to be capable of switching between communicating with the local upper layers via the local HAL and communicating with remote upper layers via the Network HAL, depending on whether a satisfactory connection is available. Thus, the Network HAL (which may be a series of Network-based APIs) can be used to facilitate low-latency interaction between the cloud OS and the local hardware, while the local OS can be a lightweight OS that can be executed locally when a connection to the cloud OS is weak or not available.

Thus, returning to the generalised terms used previously, the user equipment may comprise a local hardware abstraction layer (e.g. a conventional HAL) for interfacing (e.g. communicating with the lower layers of the stack) with one or a plurality of respective hardware drivers of the user equipment. This allows the user equipment to maintain functionality even when a connection is not available. Hence, a reliable and more useable device is provided. It is preferred that the local computing resource has lower or equal computing resource requirements (e.g. processor speed required, available memory required, and so on) than the remote computing resource. In this way, a user equipment can be provided having limited computing resources (e.g. memory, processor speed, battery capacity, and so on) because it only needs to be capable of executing basic applications when a connection is unavailable. For instance, a smartphone will move frequently, sometimes to locations with poor connectivity, so there may regularly be a need for the local OS. In contrast, a smart mirror would typically be installed permanently in a location with good connectivity and so would be less likely to need to be capable of switching between a local and a cloud OS. The local hardware abstraction layer for interfacing with one or a plurality of respective hardware drivers of the user equipment may be termed a "first local HAL" and (when present in the UE) the local portion N-HAL of the UE may be termed a "second local HAL".

In the systems of the present disclosure, the user equipment may be configured to, in response to identifying that a connection between the user equipment does not satisfy one or more connection quality criteria, execute a local computing resource (e.g. a local OS and/or local application) of the user equipment based on the data identifying the user input and using the local hardware abstraction layer (e.g. a local hardware abstraction layer that provides a conventional interface between the local hardware and the local software of the user equipment). The user equipment may periodically re-assess the connection quality, or it may continuously re-assess the connection quality, or it may only execute the local computing resources in response to a total loss of connection. In any case, this allows the user equipment to continue operating using a local HAL (e.g. using a lightweight local OS) even when the connection quality is poor. Various criteria can be used for this purpose. For instance, the one or more connection quality criteria comprise any one or more of: a measure of latency for the user equipment; a measure of latency (which could be measured using a ping) between the user equipment and the server (or between the user equipment and any other network entity); a measure of signal strength at the user equipment; a measure of a download and/or upload bandwidth of the user equipment; a measure of a download and/or upload bandwidth of the server; a measure of a packet loss rate; an indication of whether the user equipment and/or the server is connected to a network; and/or a measure of jitter. Other criteria that can be used will be apparent to the skilled reader.

Thus, it can be seen that compared to a traditional local OS architecture, the input lag of this new cloud device architecture is only increased by any delays introduced by the network connection between the client and the cloud platform, in contrast to the architecture of Figure 4 which also introduces redundant processing. Therefore, according to the embodiments of Figures 5 to 7, if network latency is kept low (e.g. by using a 5G connection), input lag will remain comparable to that of a traditional local OS.

In essence, the present disclosure provides a cloud device (e.g., cloud smartphone, tablet, etc.) architecture that benefits from all the advantages of cloud streaming services while minimising, or even eliminating, all the issues introduced by such systems. It also allows hardware to be simplified and to reduce the cost of client devices, as they no longer need to run a full OS locally. All the processing is now done on the cloud platform, leaving the client device to handle only basic video and audio decoding tasks (and perhaps to run a lightweight OS in the event of a loss of connectivity).

The systems of the present disclosure can implement an initialisation procedure, which is omitted from Figures 5 to 7 for simplicity, in which the user equipment (e.g. a cloud phone) first communicates with the server. This initialisation can be used to ensure that the hardware is connected to an appropriate cloud provider, which should confirm all the information needed to correctly provide the content to the cloud device. Examples of the information that could be communicated in the initialisation include: device capabilities (e.g. resolution, hardware, type of device, N-HAL version, the number and type of input devices, etc.): authentication/authorisation data between the user equipment and the cloud server (e.g. authentication tokens); and session ID establishment and other parameters that help to maintain the connectivity and re-stablish connectivity in case of failures. The remote OS can be made aware of what inputs are available (and hence how the OS should operate) using such an initialisation process. For example, the initialisation process could be started by the local N-HAL obtaining information from local drivers and starting the initialisation by sending relevant information to the cloud for the OS to be established or configured.

In the above embodiments, the data identifying the user input typically comprises data derived from a hardware driver of the input device of the user equipment. For example, the data identifying the user input can be the same data that would normally be sent from the drivers to the application layer in a conventional device, and the N-HALs described herein do not necessarily send raw data from the drivers to the cloud. For instance, the data sent to the cloud by the local N-HAL of the present disclosure is similar to the data sent to upper layers by the current HAL of Android devices. The N-HALs described herein can "translate" raw data from the drivers into a form that the upper OS layers can understand and use. Such translation of raw data from the drivers can be performed by the local N-HAL and/or the N-HAL in the server. For example, the local N-HAL of the UE can simply act as an interface for forwarding the driver output to the cloud and all translation of such can be performed at the cloud. Alternatively, the N-HAL of the UE can perform the translation while the N-HAL of the server acts as an interface that receives the translated data and provides this to upper layers in the remote OS. It will be appreciated that both scenarios lead to a division of processing and a reduction of duplication, compared to existing cloud device architectures.

Thus, in general terms, the data derived from a hardware driver of the input device of the user equipment may be data output from the hardware driver that is translated or otherwise modified for use by a computing resource (e.g. an operating system or application). Nevertheless, as noted previously, it is not strictly necessary for the N-HAL to modify the data output from the drivers. The N-HAL could simply send the raw data output from the drivers to the remote OS, or the N-HAL could send (x, y) co-ordinates of a point on the screen that has been touched. It will be appreciated that the actual data sent by then-HAL can take various forms without departing from the inventive aspects described herein. Nevertheless, an advantageous feature of this approach is that duplicative processing is eliminated entirely or at least reduced using the architectures described herein.

It will be understood that many variations may be made to the above apparatus, systems and methods whilst retaining the advantages noted previously. For example, whilst not explicitly described, it will be understood that the remote computing resources (e.g. operating systems and applications) of the present disclosure may dynamically adapt to the client, for example by detecting and modifying accordingly the screen resolution & aspect ratio, and/or by detecting the available hardware and interfaces. Thus, in the generalised terms used previously, the user equipment may be configured to send, to the server, an indication of a display resolution and/or an aspect ratio of the user equipment and the server is configured to cause execution of the remote computing resource based on the indication of the display resolution and/or the aspect ratio of the user equipment. Such an indication could simply comprise an indication of the make/model of the device, since its display type and size may be known to the server that provides the cloud OS and so the cloud OS can execute in accordance with the known properties of the cloud device. Thus, the virtualised OS can be tailored to the particular device.

A method of manufacturing and/or operating any of the devices (or arrangements of devices) disclosed herein is also provided. The method may comprise steps of providing each of features disclosed and/or configuring the respective feature for its stated function. Moreover, a method of causing a user equipment or a server to perform any of the steps described herein, is also provided. The disclosure also provides data processing apparatus/devices/systems comprising one or more processors configured to perform any of the methods described herein. Also provided are one or more computer programs comprising instructions that, when executed by one or more computing devices (e.g. the servers or user equipment described herein), cause the computing devices to carry out any of the methods described herein. As the disclosure provides methods that may be executed by a plurality of entities, a suite of computer programs is also provided, the suite of computer programs configured to cause different entities to execute the methods of the present disclosure. Such computer programs may be provided on one or more computer-readable data carriers having stored thereon the computer program(s) of the present disclosure. A data carrier signal carrying such computer programs is also provided.

Moreover, various types of operating system can be employed, even though the disclosure primarily describes Android operating systems. The depicted arrangements are for illustrative purposes only and any alternative arrangement can be used, including iOS, Microsoft Windows, Chrome OS, BlackBerry Tablet OS, and Linux.

The present disclosure is particularly suited to high-speed and/or low-latency communication networks, such as 5G. However, various other high-speed and/or low-latency networks can be used. For instance, a good quality 4G (e.g. LTE) network with medium-to-low latency could also be used to provide a good user experience. Fiber connections accessed through a 5 GHz Wi-Fi network could also be used with the devices and systems described herein. Furthermore, due to the reduced processing time, the latency-optimised design and the buffering component of this disclosure, the systems described herein are more tolerant to higher latencies than known cloud streaming solutions. Therefore, the present disclosure can be used to improve the user experience compared to known systems, regardless of the particular network used.

In some cases, the cloud devices described herein and the cloud servers described herein can be operated and maintained by different companies. Moreover, different functionality on the cloud-side of the systems described herein can be provided by different entities. For instance, the device could be provided by one entity, the cloud server by another entity (or even multiple entities), and the N-HAL APIs by an additional entity (e.g. a network operator).

Each feature disclosed in this specification, unless stated otherwise, may be replaced by alternative features serving the same, equivalent or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and, where the context allows, vice versa. For instance, unless the context indicates otherwise, a singular reference herein including in the claims, such as "a" or "an" (such as an application or a server) means "one or more" (for instance, one or more applications or one or more servers). Throughout the description and claims of this disclosure, the words "comprise", "including", "having" and "contain" and variations of the words, for example "comprising" and "comprises" or similar, mean "including but not limited to", and are not intended to (and do not) exclude other components.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

**Claims**

1. A user equipment (101a, 101b) for interacting with a remote computing resource, wherein the remote computing resource is remote from the user equipment (101a, 101b), the user equipment (101a, 101b) configured to:

   receive a user input from an input device of the user equipment (101a, 101b);
   send data identifying the user input to a server (102) configured to cause execution of the remote computing resource, wherein the data identifying the user input is based on data from a hardware driver of the input device and is sent from the hardware driver without passing through a local application layer of the user equipment (101a, 101b); and
   receive an output of the executed remote computing resource from the server (102).

2. The user equipment (101a, 101b) of claim 1, wherein the user equipment (101a, 101b) comprises a local hardware abstraction layer for interfacing with one or a plurality of respective hardware drivers of the user equipment (101a, 101b).

3. The user equipment (101a, 101b) of claim 2, wherein the user equipment (101a, 101b) is configured to, in response to identifying that a connection does not satisfy one or more connection quality criteria, execute a local computing resource of the user equipment (101a, 101b) based on the data identifying the user input and using the local hardware abstraction layer, preferably wherein the local computing resource comprises a local operating system and/or a local application.

4. The user equipment (101a, 101b) of claim 3, wherein the one or more connection quality criteria comprise any one or more of: a measure of latency for the user equipment (101a, 101b); a measure of latency for the user equipment (101a, 101b) and/or the server (102); a measure of latency between the user equipment (101a, 101b) and the server (102); a measure of signal strength at the user equipment (101a, 101b); a measure of a download and/or upload bandwidth of the user equipment (101a, 101b); a measure of a download and/or upload bandwidth of the server (102); a measure of a packet loss rate; an indication of whether the user equipment (101a, 101b) and/or the server (102) is connected to a network; and/or a measure of jitter.

5. The user equipment (101a, 101b) of claim 3 or claim 4, wherein the local computing resource has: lower computing resource requirements than the remote computing resource; or equal computing resource requirements to the remote computing resource.

6. The user equipment (101a, 101b) of any preceding claim, wherein the user input comprises any one or more of: a touch input; an audio input; a camera input; a physical button input; a fingerprint reader input; and/or a proximity sensor input.

7. The user equipment (101a, 101b) of any preceding claim, wherein the user equipment (101a, 101b) is further configured to:

   receive the output of the executed remote computing resource; and
   provide the output of the executed remote computing resource on an output device of the user equipment (101a, 101b).

8. The user equipment (101a, 101b) of any preceding claim, wherein the user equipment (101a, 101b) comprises any one or more of: a smartphone; a tablet; a personal computer; a television; a smart watch; a smart mirror; smart glasses; an augmented reality headset; a virtual reality headset; a smart windscreen; and/or a smart wearable device.

9. A system for providing a remote computing resource to a user equipment (101a, 101b), the system comprising the user equipment (101a, 101b) of any preceding claim and at least one server (102), wherein the server (102) is configured to:

   receive the data identifying the user input;

cause execution of the remote computing resource based on the data identifying the user input; and
send the output of the executed remote computing resource to the user equipment (101a, 101b).

10. The system of claim 9, wherein one or more of the at least one servers (102) comprises a remote hardware abstraction layer for the input device of the user equipment (101a, 101b), preferably wherein the user equipment (101a, 101b) comprises an interface that is configured to communicate the data identifying the user input to the remote hardware abstraction layer of the server (102).

11. The system of claim 10, wherein the remote hardware abstraction layer of the server (102) comprises or is configured to communicate using one or a plurality of application programming interfaces, APIs, configured to cause the server (102) to receive the data identifying the user input, preferably wherein the one or a plurality of APIs are configured to cause the server (102) to interface with one or a plurality of respective hardware drivers of the user equipment (101a, 101b) to receive the data identifying the user input.

12. The system of any of claims 9 to 11, wherein the remote computing resource comprises: a cloud-based operating system, OS, configured to be executed based on the data identifying the user input; and/or a remote application configured to be executed based on the data identifying the user input.

13. The system of any of claims 9 to 12, further configured to send buffered content to the user equipment (101a, 101b), preferably wherein the buffered content comprises any one or more of: screen animations; audio content; video content; image content, vibration, and/or haptic feedback.

14. The system of any of claims 9 to 13, wherein:
the output of the executed remote computing resource comprises any one or more of: an image; an audio stream; a video stream; an instruction to provide haptic feedback; and/or an instruction to operate a sensor of the user equipment (101a, 101b).

15. A computer program comprising instructions that, when executed by a user equipment (101a, 101b) for interacting with a remote computing resource that is remote from the user equipment (101a, 101b), cause the user equipment (101a, 101b) to:

receive a user input from an input device of the user equipment (101a, 101b);
send data identifying the user input to a server (102) configured to cause execution of a remote computing resource, wherein the data identifying the user input is based on data from a hardware driver of the input device and is sent from the hardware driver without passing through a local application layer of the user equipment (101a, 101b); and
receive an output of the executed remote computing resource from the server (102).

**Patentansprüche**

1. Benutzergerät (101a, 101b) zum Interagieren mit einer entfernten Rechenressource, wobei die entfernte Rechenressource von dem Benutzergerät (101a, 101b) entfernt ist, wobei das Benutzergerät (101a, 101b) konfiguriert ist zum:

Empfangen einer Benutzereingabe von einer Eingabevorrichtung des Benutzergeräts (101a, 101b);
Senden von Daten, die die Benutzereingabe identifizieren, an einen Server (102), der zum Veranlassen der Ausführung der entfernten Rechenressource konfiguriert ist, wobei die Daten, die die Benutzereingabe identifizieren, auf Daten von einem Hardwaretreiber der Eingabevorrichtung basieren und von dem Hardwaretreiber gesendet werden, ohne eine lokale Anwendungsschicht des Benutzergeräts (101a, 101b) zu durchlaufen; und
Empfangen einer Ausgabe der ausgeführten entfernten Rechenressource von dem Server (102).

2. Benutzergerät (101a, 101b) nach Anspruch 1, wobei das Benutzergerät (101a, 101b) eine lokale Hardwareabstraktionsschicht zum Kommunizieren mit einem oder einer Vielzahl jeweiliger Hardwaretreiber des Benutzergeräts (101a, 101b) umfasst.

3. Benutzergerät (101a, 101b) nach Anspruch 2, wobei das Benutzergerät (101a, 101b), als Antwort auf das Identifizieren, dass eine Verbindung ein oder mehrere Verbindungsqualitätskriterien nicht erfüllt, konfiguriert ist zum Ausführen einer lokalen Rechenressource des Benutzergeräts (101a, 101b) auf Basis der Daten, die die Benutzereingabe identifizieren, und mittels der lokalen Hardwareabstraktionsschicht, wobei die lokale Rechenressource vorzugsweise ein lokales Betriebssystem und/oder eine lokale Anwendung umfasst.

4. Benutzergerät (101a, 101b) nach Anspruch 3, wobei das eine oder die mehreren Verbindungsqualitätskriterien eines oder mehrere umfassen von: einer Kennzahl der Latenz für das Benutzergerät (101a, 101b); einer Kennzahl der Latenz für das Benutzergerät (101a, 101b) und/oder den Server (102); einer Kennzahl der Latenz zwischen dem Benutzergerät (101a, 101b) und dem Server (102); einer Kennzahl der Signalstärke an dem Benutzergerät (101a, 101b); einer Kennzahl einer Herunterlade- und/oder Hochladebandbreite des Benutzergeräts (101a, 101b); einer Kennzahl einer Herunterlade- und/oder Hochladebandbreite des Servers (102); einer Kennzahl einer Paketverlustrate; einer Angabe, ob das Benutzergerät (101a, 101b) und/oder der Server (102) mit einem Netzwerk verbunden ist; und/oder einer Kennzahl für Jitter.

5. Benutzergerät (101a, 101b) nach Anspruch 3 oder Anspruch 4, wobei die lokale Rechenressource aufweist: niedrigere Rechenressourcenanforderungen als die entfernte Rechenressource; oder gleiche Rechenressourcenanforderungen wie die entfernte Rechenressource.

6. Benutzergerät (101a, 101b) nach einem vorstehenden Anspruch, wobei die Benutzereingabe eine oder mehrere umfasst von: einer Berührungseingabe; einer Audioeingabe; einer Kameraeingabe; einer Eingabe über eine physische Taste; einer Eingabe über ein Fingerabdrucklesegerät; und/oder einer Eingabe über einen Näherungssensor.

7. Benutzergerät (101a, 101b) nach einem vorstehenden Anspruch, wobei das Benutzergerät (101a, 101b) ferner konfiguriert ist zum:

   Empfangen der Ausgabe der ausgeführten entfernten Rechenressource; und
   Bereitstellen der Ausgabe der ausgeführten entfernten Rechenressource auf einer Ausgabevorrichtung des Benutzergeräts (101a, 101b).

8. Benutzergerät (101a, 101b) nach einem vorstehenden Anspruch, wobei das Benutzergerät (101a, 101b) eines oder mehrere umfasst von: einem Mobiltelefon; einem Tablet; einem PC; einem Fernseher; einer intelligenten Uhr; einem intelligenten Spiegel; einer Datenbrille; einem Augmented-Reality-Headset; einem Virtual-Reality-Headset; einer intelligenten Windschutzscheibe; und/oder einer intelligenten tragbaren Vorrichtung.

9. System zum Bereitstellen einer entfernten Rechenressource für ein Benutzergerät (101a, 101b), wobei das System das Benutzergerät (101a, 101b) nach einem vorstehenden Anspruch und mindestens einen Server (102) umfasst, wobei der Server (102) konfiguriert ist zum:

   Empfangen der Daten, die die Benutzereingabe identifizieren;
   Veranlassen der Ausführung der entfernten Rechenressource auf Basis der Daten, die die Benutzereingabe identifizieren; und
   Senden der Ausgabe der ausgeführten entfernten Rechenressource an das Benutzergerät (101a, 101b).

10. System nach Anspruch 9, wobei einer oder mehrere des mindestens einen Servers (102) eine entfernte Hardwareabstraktionsschicht für die Eingabevorrichtung des Benutzergeräts (101a, 101b) umfassen, wobei das Benutzergerät (101a, 101b) vorzugsweise eine Schnittstelle umfasst, die zum Kommunizieren der Daten, die die Benutzereingabe identifizieren, an die entfernte Hardwareabstraktionsschicht (102) des Servers konfiguriert ist.

11. System nach Anspruch 10, wobei die entfernte Hardwareabstraktionsschicht des Servers (102) umfasst oder konfiguriert ist zum Kommunizieren mittels einer oder einer Vielzahl von Anwendungsprogrammierschnittstellen (Application Programming Interface, API), die konfiguriert sind, um zu veranlassen, dass der Server (102) die Daten empfängt, die die Benutzereingabe identifizieren, wobei vorzugsweise die eine oder eine Vielzahl von APIs konfiguriert sind, um zu veranlassen, dass der Server (102) mit einem oder einer Vielzahl von jeweiligen Hardwaretreibern des Benutzergeräts (101a, 101b) kommuniziert, um die Daten zu empfangen, die die Benutzereingabe identifizieren.

12. System nach einem der Ansprüche 9 bis 11, wobei die entfernte Rechenressource umfasst: ein cloudbasiertes Betriebssystem (Operating System, OS), konfiguriert zur Ausführung auf Basis der Daten, die die Benutzereingabe identifizieren; und/oder eine entfernte Anwendung, konfiguriert zur Ausführung auf Basis der Daten, die die Benutzereingabe identifizieren.

13. System nach einem der Ansprüche 9 bis 12, ferner konfiguriert zum Senden von zwischengespeicherten Inhalten an das Benutzergerät (101a, 101b), wobei die zwischengespeicherten Inhalte vorzugsweise eines oder mehrere umfassen von: Bildschirmanimationen; Audioinhalten; Videoinhalten; Bildinhalten, Vibration und/oder haptischer Rückmeldung.

14. System nach einem der Ansprüche 9 bis 13, wobei:
die Ausgabe der ausgeführten entfernten Rechenressource eines oder mehrere umfasst von: einem Bild; einem Audiostream; einem Videostream; einer Anweisung zum Bereitstellen einer haptischen Rückmeldung; und/oder einer Anweisung zum Betreiben eines Sensors des Benutzergeräts (101a, 101b).

15. Computerprogramm umfassend Anweisungen, die bei Ausführung durch ein Benutzergerät (101a, 101b) zum Interagieren mit einer entfernten Rechenressource, die von dem Benutzergerät (101a, 101b) entfernt ist, das Benutzergerät (101a, 101b) veranlassen zum:

Empfangen einer Benutzereingabe von einer Eingabevorrichtung des Benutzergeräts (101a, 101b);
Senden von Daten, die die Benutzereingabe identifizieren, an einen Server (102), der zum Veranlassen der Ausführung einer entfernten Rechenressource konfiguriert ist, wobei die Daten, die die Benutzereingabe identifizieren, auf Daten von einem Hardwaretreiber der Eingabevorrichtung basieren und von dem Hardwaretreiber gesendet werden, ohne eine lokale Anwendungsschicht des Benutzergeräts (101a, 101b) zu durchlaufen; und
Empfangen einer Ausgabe der ausgeführten entfernten Rechenressource von dem Server (102).

**Revendications**

1. Équipement utilisateur (101a, 101b) destiné à interagir avec une ressource informatique distante, dans lequel la ressource informatique distante est distante de l'équipement utilisateur (101a, 101b), l'équipement utilisateur (101a, 101b) étant configuré pour :

recevoir une entrée utilisateur à partir d'un dispositif d'entrée de l'équipement utilisateur (101a, 101b) ;
envoyer des données identifiant l'entrée utilisateur à un serveur (102) configuré pour provoquer l'exécution de la ressource informatique distante, dans lequel les données identifiant l'entrée utilisateur sont basées sur des données d'un pilote matériel du dispositif d'entrée et sont envoyées à partir du pilote matériel sans passer par une couche d'application locale de l'équipement utilisateur (101a, 101b) ; et
recevoir une sortie de la ressource informatique distante exécutée à partir du serveur (102).

2. Équipement utilisateur (101a, 101b) selon la revendication 1, dans lequel l'équipement utilisateur (101a, 101b) comprend une couche d'abstraction matérielle locale destinée à s'interfacer avec un ou plusieurs pilotes matériels respectifs de l'équipement utilisateur (101a, 101b).

3. Équipement utilisateur (101a, 101b) selon la revendication 2, dans lequel l'équipement utilisateur (101a, 101b) est configuré pour, en réponse à l'identification du fait qu'une connexion ne satisfait pas un ou plusieurs critères de qualité de connexion, exécuter une ressource informatique locale de l'équipement utilisateur (101a, 101b) sur la base des données identifiant l'entrée utilisateur et à l'aide de la couche d'abstraction matérielle locale, de préférence dans lequel la ressource informatique locale comprend un système d'exploitation local et/ou une application locale.

4. Équipement utilisateur (101a, 101b) selon la revendication 3, dans lequel le ou les critères de qualité de connexion comprennent un ou plusieurs parmi : une mesure de latence pour l'équipement utilisateur (101a, 101b) ; une mesure de latence pour l'équipement utilisateur (101a, 101b) et/ou le serveur (102) ; une mesure de latence entre l'équipement utilisateur (101a, 101b) et le serveur (102) ; une mesure d'intensité de signal au niveau de l'équipement utilisateur (101a, 101b) ; une mesure d'une bande passante de téléchargement et/ou de téléversement de l'équipement utilisateur (101a, 101b) ; une mesure d'une bande passante de téléchargement et/ou de téléversement du serveur (102) ; une mesure du taux de perte de paquets ; une indication selon laquelle l'équipement utilisateur (101a, 101b) et/ou le serveur (102) sont connectés ou non à un réseau ; et/ou une mesure de gigue.

5. Équipement utilisateur (101a, 101b) selon la revendication 3 ou la revendication 4, dans lequel la ressource informatique locale présente : des exigences de ressource informatique inférieures à la ressource informatique distante ; ou des exigences de ressource informatique égales à la ressource informatique distante.

6. Équipement utilisateur (101a, 101b) selon l'une quelconque des revendications précédentes, dans lequel l'entrée utilisateur comprend un ou plusieurs parmi : une entrée tactile ; une entrée audio ; une entrée par caméra ; une entrée par bouton physique ; une entrée par lecteur d'empreintes digitales ; et/ou une entrée par capteur de proximité.

7. Équipement utilisateur (101a, 101b) selon l'une quelconque des revendications précédentes, dans lequel l'équipement utilisateur (101a, 101b) est en outre configuré pour :

   recevoir la sortie de la ressource informatique distante exécutée ; et
   fournir la sortie de la ressource informatique distante exécutée sur un dispositif de sortie de l'équipement utilisateur (101a, 101b).

8. Équipement utilisateur (101a, 101b) selon l'une quelconque des revendications précédentes, dans lequel l'équipement utilisateur (101a, 101b) comprend un ou plusieurs parmi : un téléphone intelligent ; une tablette ; un ordinateur personnel ; une télévision ; une montre intelligente ; un miroir intelligent ; des lunettes intelligentes ; un casque de réalité augmentée ; un casque de réalité virtuelle ; un pare-brise intelligent ; et/ou un dispositif à porter intelligent.

9. Système de fourniture de ressource informatique distante à un équipement utilisateur (101a, 101b), le système comprenant l'équipement utilisateur (101a, 101b) de l'une quelconque des revendications précédentes et au moins un serveur (102), dans lequel le serveur (102) est configuré pour :

   recevoir les données identifiant l'entrée utilisateur ;
   provoquer l'exécution de la ressource informatique distante sur la base des données identifiant l'entrée utilisateur ; et
   envoyer la sortie de la ressource informatique distante exécutée à l'équipement utilisateur (101a, 101b).

10. Système selon la revendication 9, dans lequel un ou plusieurs de l'au moins un serveur (102) comprennent une couche d'abstraction matérielle distante pour le dispositif d'entrée de l'équipement utilisateur (101a, 101b), de préférence dans lequel l'équipement utilisateur (101a, 101b) comprend une interface qui est configurée pour communiquer les données identifiant l'entrée utilisateur à la couche d'abstraction matérielle distante du serveur (102).

11. Système selon la revendication 10, dans lequel la couche d'abstraction matérielle distante du serveur (102) comprend ou est configuré pour communiquer en utilisant une ou plusieurs interfaces de programmation d'applications, API, configurées pour amener le serveur (102) à recevoir les données identifiant l'entrée utilisateur, de préférence dans lequel une ou plusieurs API sont configurées pour amener le serveur (102) à s'interfacer avec un ou plusieurs pilotes matériels respectifs de l'équipement utilisateur (101a, 101b) afin de recevoir les données identifiant l'entrée utilisateur.

12. Système selon l'une quelconque des revendications 9 à 11, dans lequel la ressource informatique distante comprend : un système d'exploitation, OS, en nuage, configuré pour être exécuté sur la base des données identifiant l'entrée utilisateur ; et/ou une application distante configurée pour être exécutée basée sur les données identifiant l'entrée utilisateur.

13. Système selon l'une quelconque des revendications 9 à 12, en outre configuré pour envoyer du contenu mis en mémoire tampon à l'équipement utilisateur (101a, 101b), de préférence dans lequel le contenu mis en mémoire tampon comprend un ou plusieurs quelconques parmi : des animations d'écran ; du contenu audio ; du contenu vidéo ; du contenu image, des vibrations, et/ou une rétroaction haptique.

14. Système selon l'une quelconque des revendications 9 à 13, dans lequel :
    la sortie de la ressource informatique distante exécutée comprend un ou plusieurs quelconques parmi : une image ; un flux audio ; un flux vidéo ; une instruction pour fournir une rétroaction haptique ; et/ou une instruction pour mettre en fonctionnement un capteur de l'équipement utilisateur (101a, 101b).

15. Programme informatique comprenant des instructions qui, lorsqu'elles sont exécutées par un équipement utilisateur (101a, 101b) destiné à interagir avec une ressource informatique distante qui est distante de l'équipement utilisateur (101a, 101b), amènent l'équipement utilisateur (101a, 101b) à :

recevoir une entrée utilisateur à partir d'un dispositif d'entrée de l'équipement utilisateur (101a, 101b) ;

envoyer des données identifiant l'entrée utilisateur à un serveur (102) configuré pour provoquer l'exécution d'une ressource informatique distante, dans lequel les données identifiant l'entrée utilisateur sont basées sur des données d'un pilote matériel du dispositif d'entrée et sont envoyées par le pilote matériel sans passer par une couche d'application locale de l'équipement utilisateur (101a, 101b) ; et

recevoir une sortie de la ressource informatique distante exécutée à partir du serveur (102).

Fig. 1

Fig. 2

App
304 processing

App

303 Event management

Graphics Framework 305

302 Host touch driver

Host display driver 306

310a

310a

301 Touch event

Display updated 307

# Fig. 3

404 User input

Cloud Smartphone client

408 Video stream

Cloud Smartphone server

403 Event management

Graphics 409 Framework

407 Graphics Framework

App

Event 405 management

402 Host touch driver

Host display driver 410

App 406 processing

401 Touch event

Display updated 411

# Fig. 4

Fig. 5

**ALL SYSTEM AND THIRD-PARTY APPS**

| YOUTUBE | FACEBOOK | WHATSAPP | GAMES | PHOTOS | ••• |

650
CLOUD SYSTEM
630

**FULL SYSTEM LIBRARIES AND OS RUNTIME**

620b

**NETWORK HARDWARE ABSTRACTION LAYER (N-HAL)**

CONTENT BUFFER

NETWORK APIS

620a

**NETWORK HARDWARE ABSTRACTION LAYER (N-HAL)**

CONTENT BUFFER

**KERNEL AND DRIVERS**

| DISPLAY | AUDIO | CAMERA | SENSORS | ••• |

610

## Fig. 6

750b

CLOUD SYSTEM

730b

750

720b

**ALL SYSTEM AND THIRD-PARTY APPS**

YOUTUBE | FACEBOOK | WHATSAPP | GAMES | PHOTOS •••

**FULL SYSTEM LIBRARIES AND OS RUNTIME**

**NETWORK HARDWARE ABSTRACTION LAYER (N-HAL)**

CONTENT BUFFER

**BASIC LOCAL APPS**

SETTINGS | LOCKSCREEN | ALARMS ...

730

**BASIC SYSTEM LIBRARIES**

720

**LOCAL HARDWARE ABSTRACTION LAYER (L-HAL)**

720a

NETWORK APIS

NETWORK

CONTENT BUFFER

**NETWORK HARDWARE ABSTRACTION LAYER (N-HAL)**

710

**KERNEL AND DRIVERS**

DISPLAY | AUDIO | CAMERA | SENSORS •••

## Fig. 7

**EP 4 068 093 B1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016044139 A1
- US 2020012535 A1
- EP 3345091 A1